# EUROPEAN PATENT SPECIFICATION

(11) **EP 3 591 768 B1**
(45) Date of publication and mention of the grant of the patent: **11.05.2022**
(21) Application number: 19183706.1
(22) Date of filing: 01.07.2019
(51) Int. Cl.: H01R 13/44, H01R 13/04

(54) **TOUCH-PROOF CONTACT ARRANGEMENT**
BERÜHRUNGSSICHERE KONTAKTANORDNUNG
AGENCEMENT DE CONTACT PROTÉGÉS CONTRE TOUT CONTACT

(30) Priority: 04.07.2018 DE 102018211043
(43) Date of publication of application: 08.01.2020
(73) Proprietor: TE Connectivity Germany GmbH, 64625 Bensheim (DE)
(72) Inventor: DUENKEL, Dirk, 64625 Bensheim (DE); LUELLICH, Eike, 68165 Mannheim (DE)
(74) Representative: Grünecker Patent- und Rechtsanwälte PartG mbB

(56) References cited:
- EP-A1- 2 683 036
- WO-A1-2014/187908
- DE-A1-102015 107 304
- JP-A- 2001 266 986
- US-A1- 2011 104 916

## Description

The invention relates to a touch-proof contact arrangement for an electrical plug connector and to an electrical plug connector with an electrical pin contact that is covered at two sides and at its free end by an electrically insulating contact protection with two legs and a connecting section connecting the two legs, and whereby the two sides of the pin contact are received at least in sections in two lateral recesses of the legs of the contact protection.

Touch-proof contact arrangements are known from the prior art. The contact arrangements have pin contact elements for an electrical plug connector, in particular a high-current and/or high-voltage plug connector which, for example, serve to link an electrical system of an automobile to its battery or accumulator. In electric or hybrid vehicles driven fully or in part by electrical current, very large currents and/or voltages are transmitted via the plug elements and thus the plug contacts installed therein.

Due to the high currents and/or voltages, particularly high safety requirements are placed on the plug connectors. It is therefore stipulated, for example, that the contact elements must be protected from being touched by a human finger. A standardised test finger is provided for a corresponding test, this test finger being intended to simulate a human fingertip and being pressed with a stipulated testing force against sections or apertures of the plug connector, via which the pin contacts are accessible, without the test finger thereby being permitted to come into contact with current-carrying sections of the pin contacts. Therefore, electrical pin contacts are equipped with a contact protection which prevents direct accessing of the current-carrying sections of the pin contacts with a finger.

WO 2014/187908 A1 discloses a high-current and/or high-voltage plug type connector in motor vehicle technology. A contact protection member may be provided for touch-proofing a contact member.

A further protection element for touch-proofing a blade-shaped contact is shown in DE 10 2015 107 304 A1. The protection member is a separate component being designed to be fastened to the contact tab.

JP 2001 266986 A discloses a male terminal for installing on a harness or a connecting portion of a fuse block. The male terminal may comprise an insulating plate having a recessed area on a top surface and a conductive plate fitted and adhered to the recessed area.

A further contact protection member is disclosed in US 2011/0104916 A. The contact protection member is mounted to a base of a busway system for touch-proofing an end of an electrical stab.

The aim of the invention is to create a particularly robust finger protection.

This problem is solved by a touch-proof contact arrangement, as disclosed in independent claim 1, according to the invention for electrical plug connectors as mentioned above, wherein the lateral recesses are arranged in a corner formed by the connecting section and the respective leg and do not run up to an end of the respective leg which is remote from the connection section.

Furthermore, this problem is solved by an electrical plug connector according to the invention for a high-current-and/or high-voltage plug, with at least one touch-proof contact arrangement according to the invention.

The solutions have the advantage that the pin contact is surrounded by the contact protection, as a result of which the sides and the free end of the pin contact are protected from being touched by a finger. Since the sides of the pin contact are received, at least in sections, in two lateral recesses of the legs of the contact protection, a high overlap between the contact protection and the pin contact can be achieved. The touch-proof contact arrangement according to the invention therefore has a high degree of robustness. In contrast to the prior art, no high overlapping is required between the free end of the pin contact and the connecting section in order to hold the pin contact securely in the contact protection. As a result, there is the possibility of optimising the connecting section and to make it more robust.

Further developments of the invention are cited hereafter. The individual further developments can be combined independently of one another and are each viewed in isolation.

The electrical pin contact can preferably be a flat contact. The flat contacts have the advantage that they can usually be inserted in two different plug-in directions, or in other words with angled (90°) and straight (180°) plug connectors.

The two sides of the pin contact can be arranged facing each other and preferably parallel to one another. As a result, the pin contact has a symmetrical design, e.g. with a rectangular shape. The contact protection can in this case have a substantially U-shaped profile and can surround the free end of the pin contact, and the sides from the free end up to a base opposite the free end.

The contact protection can for example be moulded, cast or otherwise shaped onto the pin contact.

The contact protection and the pin contact can be releasably connected to one another in accordance with an alternative configuration.

The electrical pin contact can be pushed in in a plug-in direction into the two lateral recesses of the legs of the contact protection, wherein the recesses hereby act as a guide for the pin contact and thus facilitate the connecting of the pin contact to the contact protection.

The pin contact and the contact protection can preferably be configured to be complementary to one another. As a result, the pin contact can be received by the contact protection in a form-fitting manner, and no large spacings arise between the contact protection and the pin contact.

According to a further advantageous configuration, the free end of the pin contact can be arched in a substantially convex manner and be received in and/or pushed into a substantially concave, particularly complementary, recess of the connecting section. Through the convex arching, the free end of the pin contact tapers in an obtuse angle. The arching can run parallel to side surfaces, which face away from one another, of the sides of the pin contact. Due to the obtuse free end, the pin contact can be received by the recess of the connecting section with a small overlap. Through the receipt, at least in sections, of the sides in the lateral recesses, a particularly robust connection can already be created between the contact protection and the pin contact. Consequently, generating a high overlap between the free end and the connecting section is not necessary. The free end does not have to be dipped deeply into the receptacle of the connecting section and a protruding edge, extending transverse to the plug-in direction, between the pin contact and the connecting section can be prevented.

The convex arching can be generated by a taper running at an obtuse angle.

Through the convex arching of the free end of the pin contact and the complementary concave recess of the connecting section, the pin contact can be plugged into the recess as snugly as possible. The spacing between the free end and a surface, facing the free end, of the recess of the connecting section can be smaller than 0.4 mm, in particular smaller than 0.2 mm. Therefore, no edge protruding in particular transverse to the plug-in direction arises between the pin contact and the connecting section, on which a mating contact complementary to the pin contact can rub and be damaged during plugging and/or unplugging.

In a further advantageous configuration, the touch-proof contact arrangement can have a form-fit transverse to a contact surface between the pin contact and the contact protection, said contact surface extending between the sides of the pin contact. Through the form-fit, a robust and secure connection is created between the pin contact and the contact protection, as a result of which it is possible to prevent the contact protection from slipping away from the pin contact, for example by an action of force transverse to the contact surface.

The form-fit between the pin contact and the contact protection can be arranged at the free end of the pin contact between the connecting section and the pin contact and/or at the corners. The form-fit can preferably be created by the sections of the sides of the pin contact which are received in the lateral recesses. In this case, the form-fit can be created in the form of a spring-groove connection, in particular a tongue-and-groove joint, in which the sections of the sides received by the lateral recesses are equipped with a profile which is complementary to the lateral recesses.

The lateral recesses can be arranged in the corner formed by the connecting section and the respective leg. As a result, a robust connection can be produced between the contact protection and the pin contact, in the case of which the contact protection is prevented from slipping off the pin contact as a result of stress transverse to the contact surface and the electrically conductive contact elements of the pin contact are prevented from no longer being touch-proof.

According to an advantageous configuration of the corner formed by the connecting section and the respective leg, the lateral recesses can extend away from the connecting section, along the leg.. As the length of the lateral recesses increases, the overlap between the contact protection and the pin contact can increase, as a result of which a mechanically robust connection is created between the contact protection and the pin contact.

However, the lateral recess is arranged in the corner formed by the connecting section and the respective leg and not run up to that end of the leg which is remote from the connecting section. The overlap in the lateral receptacles can be sufficiently large in this case that the contact protection withstands a test force of at least 30 N and thus fulfils the stipulations of a testing standard of a motor vehicle high-voltage contacting, for example LV-215, with tightened requirements. Furthermore, this can prevent the overlap between the contact protection and the pin contact from being too large so that, during plugging-together with a mating plug compatible with the pin contact, the mating plug bears too greatly on the contact protection and no longer sufficiently contacts the contact surface of the pin contact.

According to a further advantageous configuration, at least one lateral recess can be arranged between two side walls of the leg protruding in the direction of the other leg.

The side walls can in particular be formed by a shoulder arranged in the corner formed by the connecting section and the leg, this shoulder being equipped with a groove running parallel to the leg. A simple-to-realise design is thus possible, in which the sides of the pin contact can be pushed into and/or received in the lateral recesses at least in sections.

The side walls protruding in the direction of the other leg and/or the shoulder can be connected to the leg rigidly or even in a materially bonded manner. The side walls and/or the shoulder can preferably be connected monolithically to the leg. A monolithic construction has the advantage that the side walls and/or the shoulder can be shaped together with the legs in one working step, for example injection moulded.

According to a further advantageous configuration, the contact protection can be configured monolithically in order to guarantee as simple and quick a production as possible.

However, the contact protection can also be constructed modularly from separate parts, for example, the legs can be removable from the connecting section, so that the contact protection can be quickly and simply repaired again in the event of damage.

According to a preferred configuration, side-wall outer surfaces facing away from the lateral recess can be aligned with a contact surface in each case. The outer surfaces can preferably be flush with the respective contact surface. This guarantees that the touch-proof contact arrangement is arranged in a planar manner, so that a mating contact complementary to the pin contact is not raised away from the contact surface by the side surfaces and the contact surface can make optimum contact. Furthermore, the mating contact can be prevented from being rubbed against an edge of the side surfaces when the mating contact is being unplugged, as a result of which a coating of the mating contact and the side walls can be damaged. It is thus possible to produce a wear-resistant touch-proof contact arrangement.

In a further advantageous configuration, the side walls can be arranged substantially flush with the connecting section at least in sections. This can prevent there from being an edge at the contact protection which must be overcome during plugging or unplugging of a mating contact. The mating contact, for example with a contact spring, therefore does not meet serious resistance which can damage the mating contact and rub against the coating of the mating contact.

According to a further advantageous configuration, the inner width between the outer surfaces of the side walls can be smaller than a wall thickness of the legs perpendicular to the contact surface. As a result, it can be guaranteed that the legs continue to surround the sides of the contact pin despite an elastic deformation transverse to the contact surface.

The side walls can complete a cross-section, in particular a cross-section perpendicular to the contact surface, of the pin contact to make a total cross-section which corresponds in shape and size to the total cross-section of the pin contact in a region in which the pin contact is arranged between the legs, but the sides are not received in a lateral recess, as a result of which a simple shape of the touch-proof contact arrangement is guaranteed.

According to a further advantageous configuration, the side walls can cover the contact surface at least in sections. This gives rise to a high overlapping region between the side walls and the pin contact, as a result of which a high degree of stiffness can be achieved in the touch-proof contact arrangement. As great as possible a degree of stiffness of the touch-proof contact arrangement is of assistance in avoiding elastic deformations, for example if a test finger is resting on the touch protection and exerts a bending force. As great as possible a degree of stiffness of the touch-proof contact arrangement contributes to a plug connector containing it being able to comply with dimensions and tolerances envisaged for the contact protection.

According to a further advantageous configuration, the pin contact can have cavities that are complementary to the lateral recesses. The cavity can be arranged at at least one side, but preferably at each side and can be created by reshaping, milling or the like, for example. The lateral recesses may, for example, have a V-shaped groove and the complementary cavities can serve as a resilient means in order to create the form-fit between the contact protection and the pin contact transverse to the contact surface. The cavities can preferably be arranged in the corners formed by the free end and sides and can extend parallel to the lateral recesses away from the free end.

According to a further advantageous configuration, the inner width of the lateral recesses, in particular between the side walls, can increase, at least in sections, in the direction away from the connecting section. As a result, it is possible to create a guide with which the contact pin is guided into lateral recesses when being pushed in. It is thus possible to compensate deviations in the orientation of the pin contact relative to the contact protection during the pushing-in.

According to a further advantageous configuration, the electrical plug connector according to the invention can have a housing that is connected to the contact protection in a rigid or even materially bonded manner. In a preferred configuration, the contact protection and the housing can be connected to one another in a one-piece manner. As a result, it is possible for the contact protection and the housing to be able to be shaped, e.g. injection-moulded, substantially simultaneously in one working step.

As an alternative to this, the contact protection can be a separate part which can be plugged onto the pin contact when in use. For this purpose, the contact protection can have at least one catching means, which can catch in at least one complementary catching aperture of the pin contact and which prevents a movement parallel and/or antiparallel to a plug-in direction. As a result of the separate construction, the contact protection can be easily and quickly exchanged in the event of damage.

Hereinafter, the invention is described in greater detail by way of example using exemplary embodiments with reference to the attached figures. In the figures, elements which correspond to one another in design and/or function are provided with the same reference symbols.

The combination of features shown and described with the individual exemplary embodiments serves solely the purposes of explanation. According to the statements above, it is possible to dispense with a feature from an exemplary embodiment if the technical effect thereof is of no importance in a particular application. Conversely, according to the above statements, a further feature can be added in an exemplary embodiment if the technical effect thereof is meant to be advantageous or necessary for a particular application.

In the drawings:
- Fig. 1: shows a schematic perspective view of a plug connector according to the invention;
- Fig. 2: shows a schematic sectional view of a touch-proof contact arrangement according to the invention;
- Fig. 3: shows a further schematic sectional view of the touch-proof contact arrangement according to the invention from Fig. 2;

- Fig. 4: shows a schematic perspective view of a contact protection of a touch-proof contact arrangement according to the invention; and
- Fig. 5: shows a schematic perspective view of a pin contact of a touch-proof contact arrangement according to the invention.

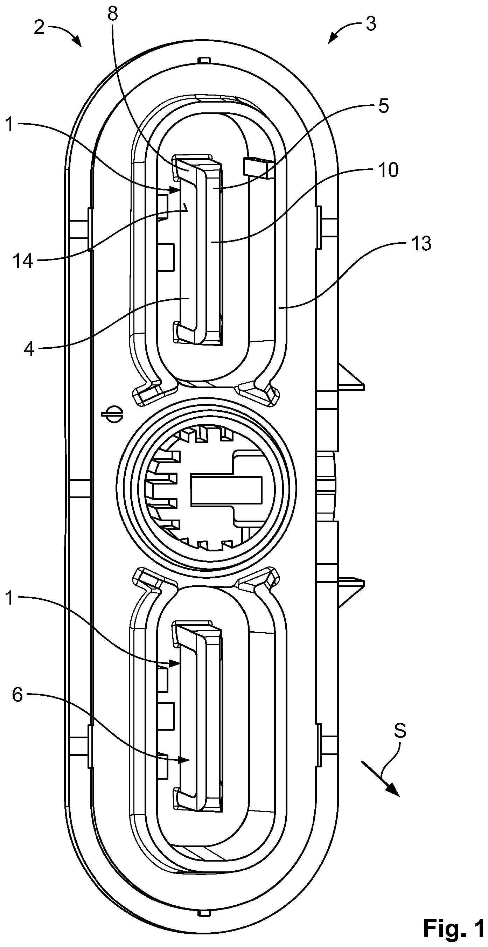

Firstly, a plug connector 2 equipped with a touch-proof contact arrangement 1 according to the invention is described with reference to Fig. 1.

The plug connector 2 has a housing 3 configured in the manner of a pin tray.

The plug connector 2 is equipped with two contact arrangements 1, arranged next to one another, with a pin contact 4 formed as a so-called flat contact, and with a contact protection 5 which is shaped in one piece with the housing 3 as a monolithic component, for example by injection moulding.

The housing 3 is equipped with slot openings 6 through which the pin contacts 4 can be pushed in in a plug-in direction S.

A contact protection 5 is formed substantially in a U-shape, with two legs 8 connected to one another by a connecting section 10.

The legs 8 are connected to the housing 3 by their ends which face away from the connecting section 10 and delimit the slot opening 6 to the side, such that, when the pin contact 4 is plugged in, a free end 11 and sides 12 which extend from the free end 11 up to the slot opening 6 are covered by the contact protection 5.

The housing 3 furthermore has in each case a collar 13 surrounding a contact arrangement 1, whereby this collar 13 is made of an electrically insulating material and protrudes beyond the contact arrangement 1 and prevents a human finger from touching electrically conductive contact surfaces 14 of the pin contact 4, which are delimited by the slot opening 6, the free end 11 and the sides 12.

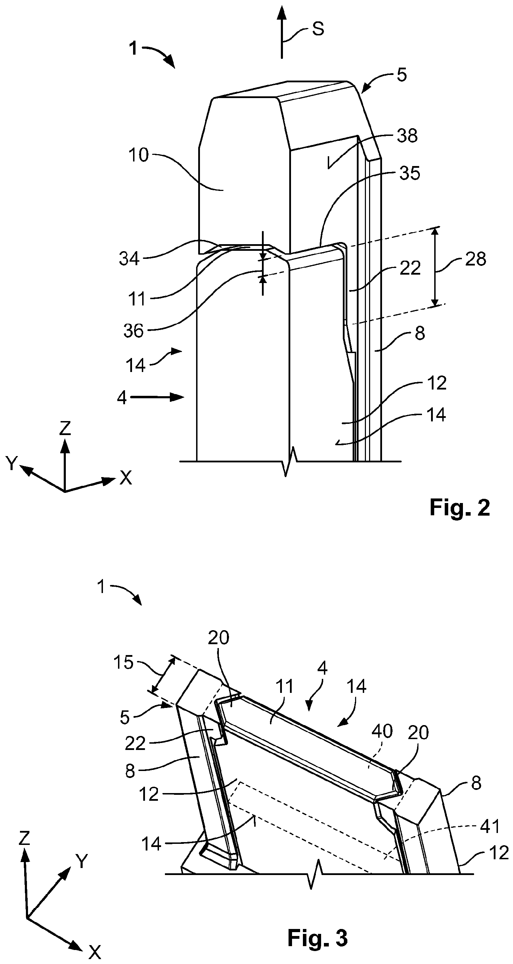

Hereinafter, the touch-proof contact arrangement 1 according to the invention is explained in greater detail with reference to Figures 2 to 5.

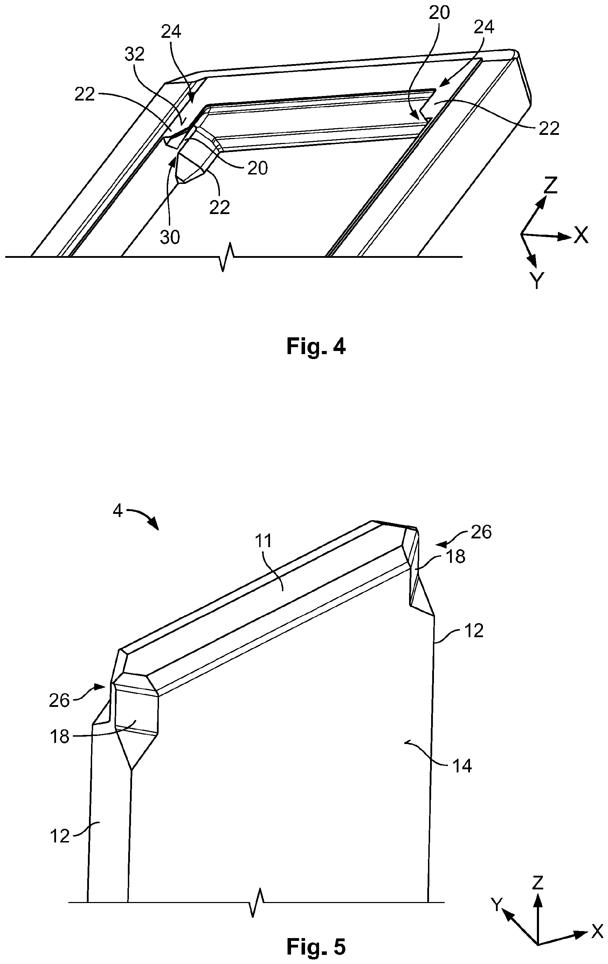

Fig. 2 and Fig. 3 each depict the touch-proof contact arrangement 1 in a schematic sectional view. Fig. 4 and Fig. 5 show a contact protection 5 or a pin contact 4 of a contact arrangement 1 according to the invention in a schematic perspective view.

The touch-proof contact arrangement 1 extends in a longitudinal direction X, a transverse direction Y and a vertical direction Z, which jointly span a Cartesian coordinate system. In the vertical direction Z, the touch-proof contact arrangement 1 can be plugged together with a mating contact (not shown) in a plug-in direction S.

The contact arrangement 1 has an electrically insulating contact protection 5 and a pin contact 4 in the form of a flat contact. At its sides 12 which delimit the pin contact 4 in the longitudinal direction X and at its free end 11 situated in the vertical direction Z, the pin contact 4 is covered by the contact protection 5. The sides 12 of the pin contact 4 are each covered by one leg 8. The free end 11 is covered by a connecting section 10 which connects the legs 8.

The pin contact 4 is equipped with contact surfaces 14 which are arranged parallel to one another and which extend between the sides 12 along the vertical direction Z and longitudinal direction X, whereby these contact surfaces 14 can be contacted by a mating contact which is compatible with the pin contact 4.

The contact protection 5 prevents a person from being able to unintentionally touch the electrically conductive contact points of the pin contact 4 with his/her finger.

In order also to prevent the contact protection 5 from no longer covering the sides 12 when force is applied to the contact protection 5 and/or the pin contact 4, the legs 8 have a wall thickness 15 transverse to the contact surface 14 which is greater than the width of the pin contact 4 in the transverse direction Y.

It is necessary for the contact arrangement 1 to have a high degree of mechanical stiffness, so that an elastic deformation of the contact arrangement 1 is prevented if, for example, a bending force bears on the contact protection 5 and exerts a bending force on the contact arrangement 1. For this purpose, the sides 12, in their corners 18 formed by the free end 11 and the respective sides 12, are received in and/or pushed into lateral recesses 20 of the contact protection 2.

The lateral recesses 20 are formed by side walls 22 which protrude in the direction of the opposing leg 8 and which delimit the lateral recesses 20 in the transverse direction Y. The side walls 22 are arranged in corners 24 formed by the connecting section 10 and the respective leg 8.

The lateral recesses 20 have the shape of a substantially V-shaped groove, which is formed in a substantially complementary manner relative to a cavity 26 at the sides 12 of the pin contact 4. Through the lateral recesses 20, there arises, with a compactly arranged touch-proof contact arrangement 1, a high overlap 28 between the contact protection 5 and the pin contact 4.

The contact arrangement 1 therefore has a form-fit in the direction transverse to the contact surface 14 between the pin contact 4 and the contact protection 5 in the form of a tongue-and-groove joint, in which the resilient means are formed by the cavity 26 at the sides 12 of the pin contact 4 and the groove of the lateral recess 20 of the contact protection.

The pin contact 4 can be pushed in in plug-in direction S into the contact protection 5, which has substantially a U-shaped cross-section. Here, the cavities 26 are pushed into and received in the respective lateral recess 20. To guide and orientate the pin contact 4 during pushing-in, the lateral recesses 20 widen gradually in the longitudinal direction X at the end facing away from the connecting section 10. In the guide 30 created as a result, the cavity 26 can be centered while being pushed-in the plug-in direction S and incorrect plugging is avoided.

The side walls 22 cover the pin contact 4 in the region of the cavities 26 transverse to the contact surface 14, wherein the side wall 22 outer surfaces 32 facing away from the lateral recesses 20 are aligned with the contact surface 14. The outer surfaces 32 can preferably be arranged flush with the contact surfaces 14. As a result, the mating contact is prevented from encountering resistance at an edge of the side walls 22, which runs transverse to the plug-in direction S, during plugging and/or unplugging and from being damaged as a result.

The free end 11 of the pin contact 4 is arched in a convex manner and is received in a substantially complementary concave recess 34, which extends along the connecting section 10 between sides of the legs 8 which face one another. The convexly arched free end 11 is formed by an obtuse bevel 38, which opens in a planar front side 40 situated in a plane spanned by the longitudinal direction X and transverse direction Y.

Since the pin contact 4 is received in the lateral recesses 20, and this already guarantees the necessary stiffness of the contact arrangement 1, it is no longer necessary to have to push the free end 11 into the connecting section 10. Therefore, the pin contact 4 can ideally be pushed into the recess 34 of the connecting section 10 snugly, or at least with a small spacing of less than 0.4 mm, in particular less than 0.2 mm, between the free end 11 and the wall of the recess 34. An edge 35 at the transition between the contact surface 14 and the connecting section 10 is thus prevented from protruding in the transverse direction 4 from the contact surface 14 on which the mating contact rubs during plugging and/or unplugging. According to this advantageous configuration, a gap 36 between the contact surface 14 and a of the recess 34 is negligibly small in the transverse direction Y at the transition in plug-in direction S from the pin contact 4 to the connecting section 10, so that the mating contact is not damaged.

In contrast to already known touch-proof contact arrangements 1, in which the form-fit between the pin contact 4 and the contact protection 5 is formed at the connecting section 10, the free end 11 in the case of the touch-proof contact arrangement 1 according to the invention need not greatly overlap with the connecting section 10. The free end 11 and the recess 34 can therefore be smaller in size in the vertical direction Z. In already known touch-proof contact arrangements 1, the free end 11 tapers to an acute angle, so that the free end 11 can dip deeply into the recess 34 of the connecting section 10, and thus a stronger form-fit is created between the pin contact 4 and the contact protection 5. The disadvantage here is, above all, that the gap 36 is larger and the mating contact is abraded at the edge 35 during plugging and/or unplugging. As a result, the number of possible plugging cycles is reduced and the wear of the plug connector and of the mating contact is greater.

The outer surfaces 32 of the side walls 22 are arranged flush with the respective outer surfaces 36 of the connecting section 10 facing away from the recess 34 in the transverse direction Y, and are aligned with the contact surfaces 14. As a result, no protruding edge comes into being at the transition between the pin contact 4 and the contact protection 5 at which a mating contact can rub during plugging and/or unplugging.

Furthermore, the side walls 22 complete a cross-section of the pin contact to make a total cross-section 40, which corresponds in shape and size to the total cross-section 42 of the pin contact 4 in a region which is situated deeper in the vertical direction Z, and in which the pin contact 4 is arranged between the legs 48, but the sides 12 are not arranged in a lateral recess 20.

Through the touch-proof contact arrangement 1 according to the invention, it is thus possible to create a plug connector with a robust touch-proof contact arrangement 1, in which large bending forces can be withstood and wear of the contact arrangement 1 and of the mating plug can be avoided.

### Reference symbols

- 1: contact arrangement
- 2: plug connector
- 3: housing
- 4: pin contact
- 5: contact protection
- 6: slot opening
- 8: leg
- 10: connecting section
- 11: free end
- 12: side
- 13: collar
- 14: contact surface
- 15: wall thickness
- 18: corners of the pin contact
- 20: lateral recesses
- 22: side walls
- 24: corners
- 26: cavity
- 28: overlap
- 30: guide
- 32: outer surface
- 34: recess
- 35: edge
- 36: gap
- 38: outer surface
- 40: total cross-section
- 42: total cross-section
- 48: leg

- S: plug-in direction
- X: longitudinal direction
- Y: transverse direction
- Z: vertical direction

## Claims

1. A touch-proof contact arrangement (1) for electrical plug connectors (2),
with an electrical pin contact (4) that is covered at two sides (12) and at its free end (11) by an electrically insulating contact protection (5) with two legs (8) and a connecting section (10) connecting the two legs (8), and
whereby the two sides (12) of the pin contact (4) are received, at least in sections, in two lateral recesses (20) of the legs (8) of the contact protection (5), **characterized in that** the lateral recesses (20) are arranged in a corner (24) formed by the connecting section (10) and the respective leg (8) and do not run up to an end of the respective leg (8) which is remote from the connecting section (10).

2. The touch-proof contact arrangement (1) according to Claim 1, wherein the free end (11) of the contact pin (4) is arched in a substantially convex manner and is received in a substantially concave recess (34) of the connecting section (10).

3. The touch-proof contact arrangement (1) according to Claim 1 or 2, wherein the touch-proof contact arrangement (1) has a form-fit in a direction transverse to a contact surface (14) between the pin contact (4) and the contact protection (5), said contact surface (14) extending between the sides (12) of the pin contact (4).

4. The touch-proof contact arrangement (1) according to any one of Claims 1 to 3, wherein the pin contact (4) has cavities (26) that are complementary to the lateral recesses (20).

5. The touch-proof contact arrangement (1) according to Claim 4, wherein at least one cavity (26) is arranged in a corner (18) of the pin contact (4) formed by the free end (11) and one side (12).

6. The touch-proof contact arrangement (1) according to Claim 3 and any one of Claims 2 to 5, wherein an inner width of the lateral recesses (20) increases at least in sections, transverse to the contact surface (14) in the direction away from the connecting section (10).

7. The touch-proof contact arrangement (1) according to any one of Claims 1 to 6, wherein at least one lateral recess (20) is arranged between two side walls (22) of the legs (8), which side walls (22) protrude in the direction of the other leg (8).

8. The touch-proof contact arrangement (1) according to Claim 7, wherein the side walls (20) projecting in the direction of the other leg are arranged in the corner (24) formed by the connecting section (10) and the respective leg (8).

9. The touch-proof contact arrangement (1) according to Claim 3 and Claim 7 or 8, wherein an outer surface (32) of the side wall (22), which faces away from the lateral recess (20) is aligned with the contact surface (14).

10. The touch-proof contact arrangement (1) according to any one of Claims 7 to 9, wherein the side walls (22) are arranged substantially flush with the connecting section (10) at least in sections.

11. The touch-proof contact arrangement according to Claim 3 and any one of Claims 7 to 10, wherein an inner width between outer surfaces (32) of the side walls (22) is smaller than a wall thickness (15) of the legs (8) transverse to the contact surface (14).

12. The touch-proof contact arrangement (1) according to any one of Claims 7 to 11, wherein the side walls (22) complete a cross-section of the pin contact (4) to make a total cross-section which corresponds in shape and size to the total cross-section of the pin contact (4) in a region in which the pin contact (4) is arranged between the legs (8), but the sides (12) are not received in a lateral recess (20).

13. The touch-proof contact arrangement (1) according to Claim 3 and any one of Claims 7 to 12, wherein the side walls (22) cover the contact surface (14) at least in sections.

14. An electrical plug connector (2) for a high-current and/or high-voltage plug, wherein the electrical plug connector has at least one touch-proof contact arrangement (1) according to any one of Claims 1 to 13.

15. The electrical plug connector (2) according to Claim 14, wherein the plug connector has a housing which forms the contact protection (4) in one piece.

## Patentansprüche

1. Berührungssichere Kontaktanordnung (1) für elektrische Steckverbinder (2),
mit einem elektrischen Stiftkontakt (4), der an zwei Seiten (12) und an seinem freien Ende (11) durch einen elektrisch isolierenden Kontaktschutz (5) mit zwei Schenkeln (8) und einem die zwei Schenkel (8) verbindenden Verbindungsabschnitt (10) abgedeckt wird, und
wobei die zwei Seiten (12) des Stiftkontaktes (4) wenigstens abschnittsweise in zwei seitlichen Aussparungen (20) der Schenkel (8) des Kontaktschutzes (5) aufgenommen sind, **dadurch gekennzeichnet, dass** die seitlichen Aussparungen (20) in einer durch den Verbindungsabschnitt (10) und den jeweiligen Schenkel (8) gebildeten Ecke (24) angeordnet sind und nicht bis zu einem von dem Verbindungsabschnitt (10) entfernten Ende des jeweiligen Schenkels (8) verlaufen.

2. Berührungssichere Kontaktanordnung (1) nach Anspruch 1, wobei das freie Ende (11) des Kontaktstiftes (4) in im Wesentlichen konvexer Form gewölbt ist und in einer im wesentlichen konkaven Aussparung (34) des Verbindungsabschnitts (10) aufgenommen ist.

3. Berührungssichere Kontaktanordnung (1) nach Anspruch 1 oder 2, wobei die berührungssichere Kontaktanordnung (1) einen Formschluss in einer Richtung quer zu einer Kontaktfläche (14) zwischen dem Stiftkontakt (4) und dem Kontaktschutz (5) aufweist, wobei sich die Kontaktfläche (14) zwischen den Seiten (12) des Stiftkontaktes (4) erstreckt.

4. Berührungssichere Kontaktanordnung (1) nach einem der Ansprüche 1 bis 3, wobei der Stiftkontakt (4) Hohlräume (26) aufweist, die komplementär zu den seitlichen Aussparungen (20) sind.

5. Berührungssichere Kontaktanordnung (1) nach Anspruch 4, wobei wenigstens ein Hohlraum (26) in einer durch das freie Ende (11) und eine Seite (12) gebildete Ecke (18) des Stiftkontaktes (4) angeordnet ist.

6. Berührungssichere Kontaktanordnung (1) nach Anspruch 3 und einem der Ansprüche 2 bis 5, wobei eine innere Breite der seitlichen Aussparungen (20) wenigstens abschnittsweise quer zu der Kontaktfläche (14) in der Richtung von dem Verbindungsabschnitt (10) weg zunimmt.

7. Berührungssichere Kontaktanordnung (1) nach einem der Ansprüche 1 bis 6, wobei wenigstens eine seitliche Aussparung (20) zwischen zwei Seitenwänden (22) der Schenkel (8) angeordnet ist und die Seitenwände (22) in der Richtung des anderen Schenkels (8) vorstehen.

8. Berührungssichere Kontaktanordnung (1) nach Anspruch 7, wobei die in Richtung des anderen Schenkels vorstehenden Seitenwände (20) in der durch den Verbindungsabschnitt (10) und den jeweiligen Schenkel (8) gebildeten Ecke (24) angeordnet sind.

9. Berührungssichere Kontaktanordnung (1) nach Anspruch 3 und Anspruch 7 oder 8, wobei eine Außenfläche (32) der Seitenwand (22), die von der seitlichen Aussparung (20) weg gewandt ist, auf die Kontaktfläche (14) ausgerichtet ist.

10. Berührungssichere Kontaktanordnung (1) nach einem der Ansprüche 7 bis 9, wobei die Seitenwände (22) wenigstens abschnittsweise im Wesentlichen bündig mit dem Verbindungsabschnitt (10) angeordnet sind.

11. Berührungssichere Kontaktanordnung nach Anspruch 3 und einem der Ansprüche 7 bis 10, wobei eine innere Breite zwischen Außenflächen (32) der Seitenwände (22) kleiner ist als eine Wanddicke (15) der Schenkel (8) quer zu der Kontaktfläche (14).

12. Berührungssichere Kontaktanordnung (1) nach einem der Ansprüche 7 bis 11, wobei die Seitenwände (22) einen Querschnitt des Stiftkontaktes (4) zu einem Gesamtquerschnitt vervollständigen, der in Form und Größe dem Gesamtquerschnitt des Stiftkontaktes (4) in einem Bereich entspricht, in dem der Stiftkontakt (4) zwischen den Schenkeln (8) angeordnet ist, die Seiten (12) jedoch nicht in einer seitlichen Aussparung (20) aufgenommen sind.

13. Berührungssichere Kontaktanordnung (1) nach Anspruch 3 und einem der Ansprüche 7 bis 12, wobei die Seitenwände (22) die Kontaktfläche (14) wenigstens abschnittsweise abdecken.

14. Elektrischer Steckverbinder (2) für einen Hochstrom- und/oder Hochspannungsstecker, wobei der elektrische Steckverbinder wenigstens eine berührungssichere Kontaktanordnung (1) nach einem der Ansprüche 1 bis 13 aufweist.

15. Elektrischer Steckverbinder (2) nach Anspruch 14, wobei der Steckverbinder ein Gehäuse aufweist, das den Kontaktschutz (4) in einem Stück bildet.

## Revendications

1. Agencement de contact à l'épreuve des contacts (1) pour connecteurs électriques enfichés (2),
comportant un contact de broche électrique (4) qui est recouvert des deux côtés (12) et à son extrémité libre (11) par une protection de contact (5) électriquement isolante comportant deux jambes (8) et une section de connexion (10) reliant les deux jambes (8), et
grâce à quoi les deux côtés (12) du contact de broche (4) sont reçus, au moins en sections, dans deux évidements latéraux (20) des jambes (8) de la protection de contact (5), **caractérisé en ce que** les évidements latéraux (20) sont disposés dans un coin (24) formé par la section de connexion (10) et la jambe (8) respective et ne vont pas jusqu'à l'extrémité de la jambe (8) respective distante de la section de connexion (10).

2. Agencement de contact à l'épreuve des contacts (1) selon la revendication 1, dans lequel l'extrémité libre (11) de la broche de contact (4) est incurvée de façon pratiquement convexe et est reçue dans un évidement pratiquement concave (34) de la section de connexion (10).

3. Agencement de contact à l'épreuve des contacts (1) selon la revendication 1 ou la revendication 2, l'agencement de contact à l'épreuve des contacts (1) présentant une liaison de forme dans une direction transversale à la surface de contact (14) située entre le contact de broche (4) et la protection de contact (5), ladite surface de contact (14) s'étendant entre les côtés (12) du contact de broche (4).

4. Agencement de contact à l'épreuve des contacts (1) selon l'une quelconque des revendications 1 à 3, dans lequel le contact de broche (4) présente des cavités (26) qui sont complémentaires avec les évidements latéraux (20).

5. Agencement de contact à l'épreuve des contacts (1) selon la revendication 4, dans lequel au moins une cavité (26) est disposée dans un coin (18) du contact de broche (4) formé par l'extrémité libre (11) et un premier côté (12).

6. Agencement de contact à l'épreuve des contacts (1) selon la revendication 3 et l'une quelconque des revendications 2 à 5, dans lequel la largeur interne des évidements latéraux (20) augmente au moins en sections transversalement à la surface de contact (14) dans la direction s'écartant de la section de connexion (10).

7. Agencement de contact à l'épreuve des contacts (1) selon l'une quelconque des revendications 1 à 6, dans lequel au moins un évidement latéral (20) est disposé entre deux parois latérales (22) des jambes (8), lesdites parois latérales (22) dépassant dans la direction de l'autre jambe (8) .

8. Agencement de contact à l'épreuve des contacts (1) selon la revendication 7, dans lequel les parois latérales (20), dépassant dans la direction de l'autre jambe, sont disposées dans le coin (24) formé par la section de connexion (10) et la jambe (8) respective.

9. Agencement de contact à l'épreuve des contacts (1) selon la revendication 3 et la revendication 7 ou la revendication 8, dans lequel la surface externe (32) de la paroi latérale (22) qui fait face à distance de l'évidement latéral (20) est alignée avec la surface de contact (14).

10. Agencement de contact à l'épreuve des contacts (1) selon l'une quelconque des revendications 7 à 9, dans lequel les parois latérales (22) sont disposées pour être sensiblement à fleur avec la section de connexion (10) au moins en sections.

11. Agencement de contact à l'épreuve des contacts (1) selon la revendication 3 et l'une quelconque des revendications 7 à 10, dans lequel la largeur interne entre les surfaces externes (32) des parois latérales (22) est plus petite que l'épaisseur de paroi (15) des jambes (8) transversale à la surface de contact (14).

12. Agencement de contact à l'épreuve des contacts (1) selon l'une quelconque des revendications 7 à 11, dans lequel les parois latérales (22) complètent la section transversale du contact de broche (4) pour réaliser une section transversale totale qui correspond en forme et en taille à la section transversale totale du contact de broche (4) dans une zone dans laquelle le contact de broche (4) est agencé entre les jambes (8), mais les côtés (12) ne sont pas reçus dans un évidement latéral (20).

13. Agencement de contact à l'épreuve des contacts (1) selon la revendication 3 et l'une quelconque des revendications 7 à 12, dans lequel les parois latérales (22) recouvrent la surface de contact (14) au moins en sections.

14. Connecteur électrique enfiché (2) destiné à une fiche pour fort courant et/ou forte tension, le connecteur électrique enfiché possédant au moins un agencement de contact à l'épreuve des contacts (1) conforme à l'une quelconque des revendications 1 à 13.

15. Connecteur électrique enfiché (2) selon la revendication 14, le connecteur enfiché possédant une enveloppe qui forme la protection de contact (4) en un seul bloc.
